# EUROPEAN PATENT SPECIFICATION

(11) **EP 2 551 599 B1**
(45) Date of publication and mention of the grant of the patent: **16.04.2014**
(21) Application number: 12177723.9
(22) Date of filing: 24.07.2012
(51) Int. Cl.: F23R 3/34

(54) **Reduction of CO and O2 emissions in oxyfuel hydrocarbon combustion systems using OH radical formation with hydrogen fuel staging and diluent addition**
Verringerung der CO- und O2-Emissionen in Sauerstoff-Kohlenwasserstoff-Verbrennungssystemen durch OH-Radikalbildung mit gestufter Wasserstoffzufuhr und Beimengung von Verdünnungsgas
Réduction des émissions de CO et O2 dans des systèmes de combustion oxyfuel d'hydrocarbures utilisant la formation de radicaux OH avec injection étagée d'hydrogène et addition d'un gaz diluant

(30) Priority: 27.07.2011 US 201113191521
(43) Date of publication of application: 30.01.2013
(73) Proprietor: General Electric Company, Schenectady, NY 12345 (US)
(72) Inventor: Akula, Rajani Kumar, 560066 Bangalore, Karnataka (IN); Popovic, Predrag, Greenville, SC South Carolina 29615 (US)
(74) Representative: Cleary, Fidelma

(56) References cited:
- EP-A2- 2 206 964
- EP-A2- 2 309 189
- US-A1- 2004 107 701
- US-A1- 2004 206 090

## Description

### BACKGROUND OF THE INVENTION

The present invention relates to gas and liquid fuel turbine engines used in power generation plants and, in particular, to an improved combustor design for use in industrial gas turbine engines that provides reduced carbon monoxide and oxygen emissions using hydrogen fuel staging and a diluent feed in order to control the formation of OH radicals and carbon monoxide in the combustion exhaust.

Gas turbine engines typically include a compressor section, a combustor section and at least one turbine that rotates to generate electrical power. The compressor discharges directly into the combustor section where hydrocarbon fuel is injected, mixed and burned to produce thermal and kinetic energy. The combustion gases are channeled into and through one or more stages of the turbine which extracts rotational energy from the exhaust gases, with the rotational energy then being used to generate electrical power. Document EP 2309189 discloses a prior art gas turbine engine having the features of the preamble of claim 12.

In order to achieve maximum operating efficiencies, gas turbine combustion systems, particularly those employing "multiple can" combustor designs, operate over a wide range of different fuel compositions, pressures, temperatures and fuel/air ratio conditions, preferably with the ability to use either liquid or gas fuels or a combination of fuels (known as "dual fire" systems). Many candidate hydrocarbon fuels used in gas turbine combustors contain unwanted contaminants and/or byproducts of other processes that tend to inhibit combustion and/or reduce the capacity and efficiency of the system. In addition, many existing gas turbine systems tend to operate in a slightly rich mode, i.e., with slightly less than the precise stoichiometric amount of oxygen in the feed necessary to bum the entire hydrocarbon fuel mixture, resulting in at least some incomplete combustion of the fuel and hence a certain amount of carbon monoxide and oxygen necessarily being present in the exhaust gases. Thus, in a conventional gas turbine system, the products of combustion invariably contain CO and small amounts of excess oxygen resulting from the equilibrium chemistry at the nominal temperatures of combustion with even some of the CO₂ products of combustion disassociating into CO and O₂.

In addition, perfect mixing of fuel and air cannot be achieved in most gas turbine engines, resulting in some of the oxygen present in the feed not reacting with the hydrocarbon fuel. As a result, the resulting exhaust stream from most gas turbine combustors, particularly multiple can combustors, comprise mostly N₂ and CO₂ but by design still contain residual amounts of CO and O₂ which eventually must be removed or reacted in downstream operations in order to maintain desired overall gas turbine efficiencies.

One known solution to removing excess CO and O₂ from the exhaust streams of conventional gas turbine engines utilizes a catalyst system in which the products of combustion pass through the turbine section of the engine and then a heat recovery steam generator ("HRSG") with a portion of the exhaust stream being treated by an oxidation catalyst which at the lower temperatures in the HRSG alters the equilibrium between CO and O₂ and CO₂ and forces trace amounts of CO and O₂ to convert to CO₂, resulting in a more environmentally acceptable exhaust stream, i.e., with CO₂ and a lower oxygen content. In order for the catalyst to approach zero oxygen and CO content, however, a sufficient amount of CO must be present to consume all the O₂ in the exhaust.

Given the practicality of most gas turbine operations (i.e., a slightly rich combustion environment in each combustor can), excess CO in the exhaust is known to have a negative effect on overall engine operation because the energy content of the CO will not be fully captured, eventually resulting in an efficiency penalty to the system. As a result, it has become important in the gas turbine industry to minimize and carefully control the amount of excess CO in the exhaust stream resulting from combustion in each "can" and to monitor and control the CO content leaving a bank of combustors.

Two additional practicalities in the gas turbine art are known to drive the need to control the amount of CO formed in the turbine exhaust. First, the fuel to air ratio of the gas turbine engine is subject to finite control limits since only a limited ability exists to control the exact amount of fuel being fed to each combustor. Second, individual combustors may operate with a slightly different fuel to air ratio, resulting in slight variations in the emissions on a can-to-can basis. Those additional basic design features of combustors have contributed to the need to operate gas turbine engines using a slight amount of excess fuel and to create the right amount of CO such that all (or virtually all) of the oxygen still present in the exhaust eventually is consumed and/or eliminated using catalyst treatment. In the past, it has been difficult to control the exact amount of CO produced during the initial combustion, particularly on a can-to-can basis.

Thus, a need exists for a combustion system that relies on a slightly rich, but sufficiently lean mixture of hydrocarbon fuel and air to yield low emissions of air pollutants, particularly CO, when operating an advanced, high efficiency gas turbine engine. A need also exists to carefully predict and control the amount of CO formed during the initial combustion in each can in order to maximize the operating efficiency of the entire engine, including any downstream catalyst treatment operations.

The present invention addresses the above concerns through a new method for reducing and controlling the CO and oxygen emissions in an "oxyfuel" type gas turbine combustor using a hydrocarbon dominant fuel (such as natural gas or even "dual fire" fuel systems). As in conventional systems, hydrocarbon fuel is burned in each combustor using an oxidizer (e.g., air and/or an oxygen-rich feed). It has been found that the entire combustion dynamics can be improved by injecting additional, interim amounts of one or more auxiliary feed streams described below. The additional interim injections result in the formation of a controlled amount of an OH radical, which in turn helps to reduce the amount of CO and free O₂ formed during initial combustion. That is, the OH radical resulting from the injections combines with CO to produce additional CO₂, thereby reducing the amount of unreacted CO and oxygen before the exhaust stream leaves the combustor. In the end, the removal of CO and O₂ in the exhaust improves the overall efficiency of the entire gas turbine engine.

As noted above, the invention offers particular advantages in "rich" combustion systems, i.e., having a Phi value greater than 1.0 (and preferably between 1.0 and 1.1). A rich combustion typically leaves very little oxygen in the exhaust and creates an exhaust environment susceptible to the formation of the OH radical (a "chain breaking" type reaction). The resulting mixture created at that location near the combustor head tends to increase the OH radical density, which in turn reduces the amount of CO by virtue of a subsequent reaction to form CO₂. Specifically, by injecting a small amount of free hydrogen, followed by an oxidizer element and then a diluent stream (e.g., nitrogen), the OH radical formed from the hydrogen injection reacts with CO to form carbon dioxide, which can then be more easily and efficiently removed by conventional means.

The present invention also ensures that other unwanted emissions (particularly NOₓ) do not exceed expected and/or mandated EPA exhaust limitations. That is, the invention provides a combustion system using a premixed combustion feed which would be characterized as slightly rich, but with a fuel/air mixture lean enough to ensure that thermal NOx formation in the zone remains negligible. The addition of hydrogen and oxidizer feeds followed by a diluent coolant are also sufficient to meet the inlet temperature demands of the gas turbine. The invention thus has particular advantages in applications where the inlet temperature demands of the turbines are so high as to preclude the possibility of achieving low thermal NOx emissions levels by lean premixed combustion alone.

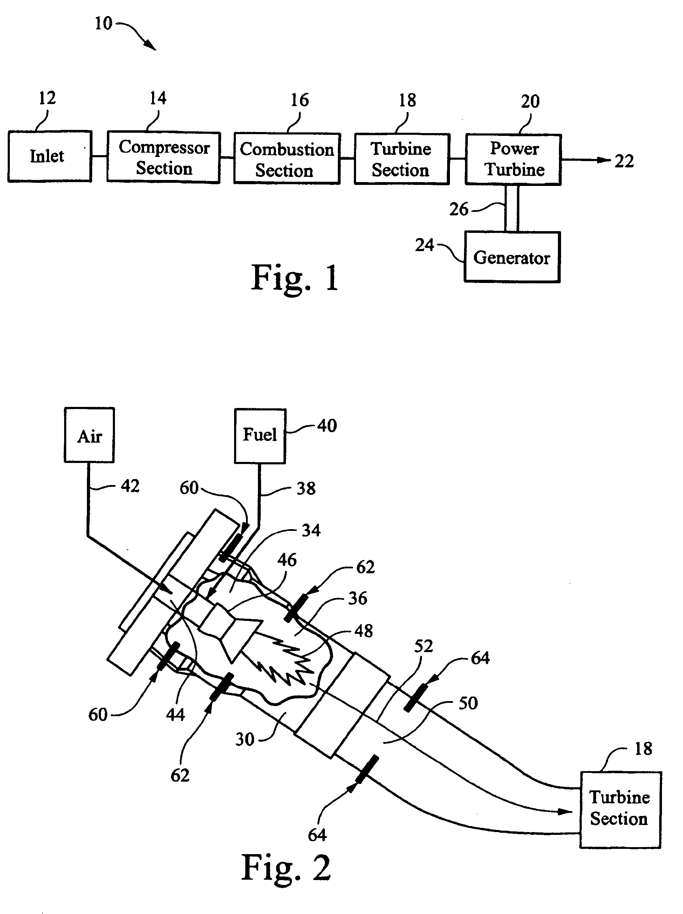

These and other advantages of the invention are achieved by providing a combustor for a gas turbine that includes the following basic features as described in greater detail in connection with FIGS. 1-3. At specified times and locations within a combustor, hydrogen gas is injected into the head of the combustor at the pre-defined target locations for a prescribed period of time and in a fixed amount, followed by injection of an oxidizer component, again in specified amounts for fixed durations. The exact amount of injected hydrogen and oxidizer will vary, depending on the amount of OH radical being formed, which in turn controls the eventual formation of CO₂. The free hydrogen can be supplied directly or as a product of known reforming techniques away from the gas turbine engine. Once the equilibrium of the combustion products is accomplished using additional hydrogen and the oxidizer, a specific amount of diluent (including carbon dioxide) is injected into the combustor (or alternatively slightly downstream of the combustor) in order to control the temperature of the exhaust and preserve the formation of CO₂ before the exhaust stream reaches the turbine.

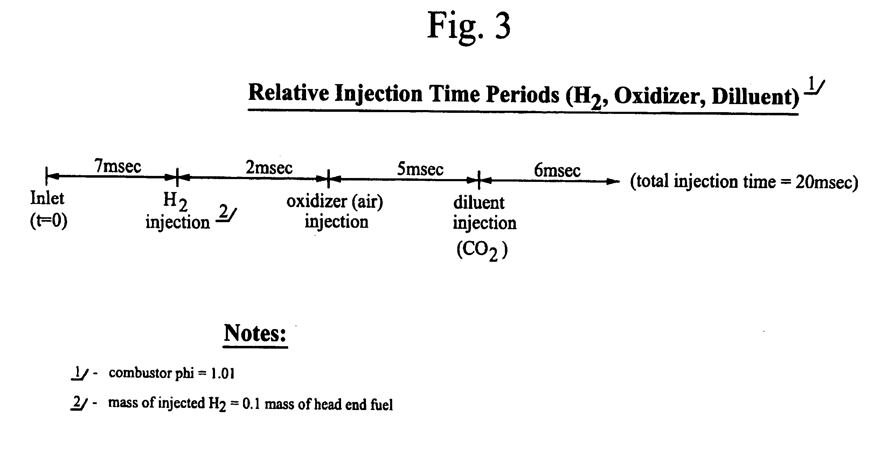

In the exemplary embodiments described below in connection with FIGS. 2 and 3, free hydrogen is periodically injected into the system for a fixed duration and in an exact amount, followed by use of the oxidizer component, such as air or an oxygen-enriched feed steam. Balancing the amount of hydrogen and oxidizer injected into the combustor head serves to control the formation of the OH radical, which in turn controls the amount of any remaining CO. The oxidizer component tends to increase the formation of OH which then reacts with free CO in the systems to form carbon dioxide according to the empirical formula:

CO + OH → CO₂

Significantly, none of the known prior art processes rely on hydrogen and oxide injection to precisely control CO formation at that point in a combustor can, particularly in order to reduce the amount of CO down to the desired stoichiometric amount.

### BRIEF DESCRIPTION OF THE INVENTION

The present invention resides in a method for reducing the amount of carbon monoxide and oxygen emissions in an oxyfuel hydrocarbon combustion system and in a gas turbine engine as defined in the appended claims

### BRIEF DESCRIPTION OF THE DRAWINGS

Embodiments of the present invention will now be described, by way of example only, with reference to the accompanying drawings in which:
FIG. 1 is a schematic of a conventional combustion system known in the art using known hydrocarbon fuels (such as natural gas), but without supplemental hydrogen, oxidizer or diluent injections;
FIG. 2 is a cross sectional view of a premixed combustor forming part of a gas turbine as constructed in accordance with an exemplary embodiment of the invention; and
FIG. 3 is a simplified mass flow profile illustrating the injection dynamics (including the injection time, duration and flow rate) for the hydrogen, oxidizer and diluent components used in an exemplary embodiment of the invention.

### DETAILED DESCRIPTION OF THE INVENTION

As noted above, a gas turbine engine typically includes a compressor section, a combustion section and a turbine section with the compressor section driven by the turbine through a common shaft connection. The combustion section nominally includes a circular array of a plurality of circumferentially spaced combustors with the fuel/air mixture being burned in each combustor to produce the hot energetic flow of gas which flows through a transition piece for directing the gas to the turbine blades of the turbine section. A conventional combustor is described in commonly-owned U.S. Patent No. 5,259,184. For purposes of the present description, only one combustor is illustrated, it being understood that all of the other combustors arranged about the turbine will be substantially similar to the combustor illustrated in FIG. 1.

The term "oxyfuel" as used in connection with FIGS. 1-3 refers to combustion systems using natural gas (or other hydrocarbon fuels) and oxygen (e.g., an ambient air feed). A "diluent" as used herein refers to air, CO₂ and/or other feeds (including nitrogen) that tend to reduce the combustor exhaust temperature down to a point that inhibits additional CO from forming after the initial hydrogen injection described above. The term "Misc" as used herein refers to the time period in milliseconds for injection feeds to the combustor. The reference to "1.10^{th}" is the ratio of hydrogen fed to the combustor as compared to the basic fuel feed amount (e.g., natural gas). The letter "M" refers to the predicted rate of formation of CO (based on modeling).

Figure 1-3 illustrate the primary aspects of the invention. As indicated above, by balancing the flow rate, position and timing of the hydrogen and oxidizer injections into the combustor, the amount of CO in the exhaust of each combustor can be reduced. Upon injection, the hydrogen and oxidizer react in a non-equilibrium reaction to form an OH radical, which in turn reacts with the CO formed during the initial combustion to form CO₂. Carbon dioxide is not considered a pollutant and can be more easily removed from the system by downstream catalytic operations. Although a residual amount of oxygen may already be present in the combustion gasses, the additional oxidizer component helps to drive the CO to CO₂ reaction forward using the OH radical.

Turning to the figures, FIG. 1 depicts a general schematic of a conventional gas turbine engine known in the art, but without the advent of the additional injections to improve performance of the combustors as referred to herein. Gas turbine engine 10 typically comprises a gas inlet 12 for feeding an initial oxidizer, e.g., ambient air, into a compressor section 14, a combustion section 16, a turbine section 18, a power turbine section 20 driven by the expanded combustion gases and an exhaust 22.

Nominally, a controlled amount of hydrocarbon fuel (such as natural gas) feeds directly into the gas turbine combustor where it ignites and produces thermal energy. The spent exhaust gases exiting from the combustor drive the gas turbine 18 and typically pass at a lower pressure into a heat recovery steam generator (not shown). As noted above, the combustion section often includes a circular array of a plurality of circumferentially spaced combustors. A prescribed fuel or fuel/air mixture is burned in each combustor to produce a hot energetic flow of gas which flows through a transition piece for transporting the gas to the turbine blades of the turbine section which serves as the main driving force to generate electricity via rotating shaft 26 and electrical generator 24 as shown.

Referring now to FIG. 2, a combustor for a gas turbine engine, shown generally as 30, having central axis 52 includes a primary combustion zone 36 with primary air and hydrocarbon fuel feeds, 42 and 40, respectively, both of which are injected into the head end portion of the combustor 34 using mixing vane 46. Typically, primary combustion chamber 30 includes at least one fuel feed that provides a first fuel source and at least one air, such as from compressor section 14 in FIG. 1, to form an inlet compressed air stream 42 entering the combustor can. Nominally, mixing vane 46 can be used to provide a mixed fuel/air stream having sufficient annular momentum to move through fuel/air passageway into primary combustion zone 36.

Immediately downstream of the mixing head, the fuel air mixture ignites using a pilot flame in the primary combustion zone 36. Thereafter, an assembly such as that described in commonly-owned U.S. Patent No. 6,192,688, directs the combined hot gases of combustion 50 into the turbine nozzles and turbine blades into turbine section 18. An exemplary combustion system can also include a plurality of start-up fuel nozzles, premixing fuel nozzles and an ignition device (not shown) such as an electrically energized spark plug. The initial combustion in the primary combustion zone thus occurs as air under pressure mixes with fuel from the start-up fuel nozzles and/or the premixing fuel nozzles.

FIG. 2 also illustrates exemplary means for accomplishing the stepped introduction of hydrogen, an oxidizer and the diluent as generally described above as first, second and third supplemental feeds to the combustor head. This secondary injection system includes a plurality of hydrogen injection nozzles 60, shown by way of example in FIG. 2, circumferentially disposed at predefined locations near the top of the combustor head. Nominally, the hydrogen injection points into the combustor will be combined into a single manifold to allow for hydrogen to be injected at the designated peripheral points. However, it may desirable for only selected ones of the hydrogen injection ports 60 to be open and flowing, depending on the combustor operation in progress.

In like manner, the periodic oxidizer injections downstream of the mixing head as described above can be made using individual and/or manifold type oxidizer injection ports 64, with the number and size of the injection ports again dependent upon on actual combustor operation and the amount of OH radical being formed for reaction with CO. An exemplary feedback control system for determining the amount of hydrogen and oxidizer necessary to reduce the levels of carbon monoxide and oxygen in the final exhaust nominally will include a plurality of sensors for detecting the amount of carbon monoxide and OH radical in the exhaust (for example at or near the combined combustion gases 50 in FIG. 2) together with a feedback control loop (not shown) to control the hydrogen and oxidizer feeds to the combustors. The control system can be part of a General Electric SPEEDTRONIC™ Gas Turbine Control System such as that described in Rowan, W.I., "SPEEDTRONIC™ Mark V gas Turbine Control System," GE-3658D, published by GE Industrial & Power Systems of Schenectady, N.Y.

FIG. 3 of the drawings includes a simplified mass flow profile illustrating the injection dynamics (including the initiation time, duration and amount of flow during a supplemental injection period) for the hydrogen, oxidizer and diluent components as used in an exemplary embodiment of the invention. As FIG. 3 illustrates, the injections are staged, with the hydrogen injection occurring for only about 2 milliseconds, followed by the oxidizer for a period of about 5 milliseconds and finally the diluent for about 6 milliseconds, making a total injection time of only about 20 milliseconds in this particular example. As noted above, the duration, amount and frequency of the injections has been found to control the OH radical formation immediately downstream of the combustor head.

FIG. 3 also indicates that the combustor is operating in a slightly rich mode, with a Phi value of 1.01 (see Note 1 in FIG. 3), which ensures that a certain amount of CO will always be present in the exhaust at the time of hydrogen injection following initial combustion. FIG. 3 also indicates (see Note 2) that an effective amount of hydrogen during the injection step comprises approximately 1/10 the mass of the head end fuel itself, i.e., the level of fuel used during initial combustion. The changes in CO concentration resulting from the staged injection of hydrogen, oxidizer and diluent can be seen in the following table.

| Component | Base Case | With Dilution @1304°C(2380°F) | With H₂ injection and dilution @1304°C(2380°F) |
|---|---|---|---|
| CO (ppm) | 9245 | 3379.6 | 2402.7 |
| O₂(%) | 0.26366 | 0.038749 | 0.067324 |

The fourth column in particular confirms that the amount of CO in the exhaust drops significantly following the staged injections described above.

FIG. 3 thus illustrates the effect of the diluent agent injected at a point further downstream from the initial combustion, namely to lower the combustion exhaust stream temperature slightly for the reasons outlined above, including inhibiting any further formation of unwanted CO in the main exhaust stream.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A method for reducing the amount of emissions (50) in an oxyfuel hydrocarbon combustion system, comprising:
(a) feeding hydrocarbon fuel (40) and an oxidizer (42) to a head end portion of one or more combustors (30) in said combustion system;
(b) igniting the mixture of said hydrocarbon fuel (40) and said oxidizer (42) to form a first combustor exhaust stream;
(c) detecting the amount of carbon monoxide present in said first combustor exhaust stream;
(d) determining an amount of additional hydrogen and a supplemental oxidizer feed necessary to reduce the amount of carbon monoxide and oxygen present in the combustor exhaust stream based on said detected amount of carbon monoxide;
(e) identifying one or more injection nozzles (60, 64) within said combustor (30) downstream from the head end portion thereof, for injecting the additional hydrogen and the supplemental oxidizer; and
(f) injecting the determined amount of additional hydrogen and the supplemental oxidizer into said combustor at the identified injection nozzles (60, 62) based on said detected amount of carbon monoxide.

2. A method according to claim 1, further comprising the step of injecting a diluent into said combustor (30) at a point further downstream of said first combustor exhaust stream.

3. A method according to claim 2, further comprising the step of controlling the temperature of the exhaust stream at the point of injection of said diluent.

4. A method according to claim 2 or 3, wherein said diluent comprises carbon dioxide.

5. A method according to any of claims 1 to 4, wherein said step of feeding defined amounts of said hydrocarbon fuel (40) and said supplemental oxidizer (64) to one or more combustors (30) results in a Phi value greater than 1.0.

6. A method according to any of claims 1 to 5, wherein the amount of said hydrogen (60) injected into said combustor (30) is about 1/10 the mass of the original hydrocarbon fuel (40) feed.

7. A method according to any of claims 1 to 6, wherein said oxyfuel hydrocarbon combustion system comprises multiple combustors (30).

8. A method according to any of claims 2 to 7, wherein, said diluent is injected into said combustor (30) in an amount sufficient to preclude the further formation of carbon monoxide following said hydrogen (60) injection.

9. A method according to any of claims 1 to 8, wherein said steps of injecting said hydrogen (60) and said supplemental oxidizer (64) result in an amount of OH radical being formed sufficient to reduce the amount of CO through a reaction with said supplemental oxidizer (64) to form CO₂.

10. A method according to any of claims 2 to 9, wherein said injections of hydrogen, supplemental oxidizer (64) and diluent are made according to the following relative time periods: hydrogen 2X; supplemental oxidizer 5X; and diluent 6X, wherein X is the injection time period in milliseconds.

11. A method according to any preceding claim, wherein the duration, amount and frequency of said injections of hydrogen, supplemental oxidizer (64) and diluent control the OH radical formation immediately downstream of the combustor (30) head.

12. A gas turbine engine, comprising:
a gas compressor;
a plurality of combustors (30);
a turbine driven by the expanded exhaust from said combustors (30);
a primary fuel circuit for said combustors (30), said fuel circuit including means for feeding hydrocarbon fuel (40) and air to a head end of each combustor (30);
**characterised by** comprising:
a supplemental fuel circuit for one or more of said combustors, said supplemental fuel circuit including a plurality of hydrogen injection nozzles (60) for feeding additional hydrogen into said combustors (30);
one or more injection ports (64) for feeding a supplemental oxidizer into one or more of said combustors (30);
one or more carbon monoxide sensors disposed in the exhaust stream of said combustors (30); and
a feedback control loop for determining the amount of additional hydrogen and supplemental oxidizer feed necessary to reduce the amount of carbon monoxide and oxygen present in the gas turbine exhaust, identifying one or more of the plurality of hydrogen injection nozzles (60) and the injection ports (64) for feeding the determined amount of additional hydrogen and supplemental oxidizer into the combustor (30) and injecting the additional hydrogen feed and supplemental oxidizer feed through the identified hydrogen injection nozzles (60) and the injection ports (64).

13. A gas turbine engine according to claim 12, further comprising means for injecting diluent into the exhaust stream of said combustors (30) to control the temperature of said exhaust stream .

14. A gas turbine engine according to claims 12 or 13, wherein said feedback control loop comprises one or more OH radical detectors disposed in the exhaust stream of said combustors (30).

15. A gas turbine engine according to any of claims 12 to 14, wherein said hydrogen injection nozzles (60) feed an amount of hydrogen equal to about 1/10 the mass of said hydrocarbon fuel (40) being fed to said combustors (30).

## Patentansprüche

1. Verfahren zum Reduzieren der Menge von Emissionen (50) bei einem Oxyfuel-Kohlenwasserstoff-Verbrennungssystem, umfassend:
(a) Zuführen von Kohlenwasserstoffkraftstoff (40) und einem Oxidationsmittel (42) zu einem Kopfendeabschnitt einer oder mehrerer Brennkammern (30) in dem Verbrennungssystem;
(b) Entzünden der Mischung des Kohlenwasserstoffkraftstoffs (40) und des Oxidationsmittels (42), um einen ersten Brennkammerabgasstrom zu erzeugen;
(c) Ermitteln der Menge von Kohlenmonoxid, die in dem ersten Brennkammerabgasstrom vorhanden ist;
(d) Ermitteln einer Menge von zusätzlicher Wasserstoff- und Ergänzungsoxidationsmittelzuführung, die notwendig ist, um die Menge von Kohlenmonoxid und Sauerstoff, die in dem Brennkammerabgasstrom vorhanden ist, zu reduzieren, auf Grundlage der ermittelten Menge von Kohlenmonoxid.
(e) Bestimmen einer oder mehrerer Einspritzdüsen (60, 64) innerhalb der Brennkammer (30) stromabwärts ihres Kopfendabschnitts, um den zusätzlichen Wasserstoff und das Ergänzungsoxidationsmittel einzuspritzen; und
(f) Einspritzen der ermittelten Menge zusätzlichen Wasserstoffs und des Ergänzungsoxidationsmittels mittels der bestimmten Einspritzdüse (60, 62) in die Brennkammer auf Grundlage der ermittelten Menge Kohlenmonoxid.

2. Verfahren nach Anspruch 1, außerdem umfassend den Schritt des Einspritzens eines Verdünnungsmittels in die Brennkammer (30) an einem Punkt weiter stromabwärts des ersten Brennkammerabgasstroms.

3. Verfahren nach Anspruch 2, außerdem umfassend den Schritt des Regelns der Temperatur des Abgasstroms an dem Punkt des Einspritzens des Verdünnungsmittels.

4. Verfahren nach Anspruch 2 oder 3, wobei das Verdünnungsmittel Kohlendioxid umfasst.

5. Verfahren nach einem der Ansprüche 1 bis 4, wobei der Schritt des Zuführens definierter Mengen des Kohlenwasserstoffkraftstoffes (40) und des Ergänzungsoxidationsmittels (64) in eine oder mehrere Brennkammern (30) zu einem Phi-Wert größer als 1 führt.

6. Verfahren nach einem der Ansprüche 1 bis 5, wobei die Menge des Wasserstoffs (60), die in die Brennkammer (30) eingespritzt wird, ungefähr 1/10 der Masse des zugeführten Kohlenwasserstoffkraftstofifs (40) ist.

7. Verfahren nach einem der Ansprüche 1 bis 6, wobei das Oxyfuel-Kohlenwasserstoff-Verbrennungssystem mehrere Brennkammern (30) umfasst.

8. Verfahren nach einem der Ansprüche 2 bis 7, wobei das Verdünnungsmittel in einer Menge in die Brennkammer (30) eingespritzt wird, die ausreicht, um die weitere Bildung von Kohlenmonoxid nach der Wasserstoff (60) - Einspritzung auszuschließen.

9. Verfahren nach einem der Ansprüche 1 bis 8, wobei die Schritte des Einspritzens des Wasserstoffs (60) und des Ergänzungsoxidationsmittels (64) in einer Menge von OH-Radikalen resultiert, die ausreicht, um die Menge von CO durch eine Reaktion mit dem Ergänzungsoxidationsmittel (64) zum Bilden von CO₂ zu verringern.

10. Verfahren nach einem der Ansprüche 2 bis 9, wobei das Einspritzen von Wasserstoff, Ergänzungsoxidationsmittel (64) und Verdünnungsmittel gemäß den folgenden relativen Zeitabschnitten erfolgt: Wasserstoff 2X; Ergänzungsoxidationsmittel 5X; und Verdünnungsmittel 6X, wobei X die Einspritzzeitdauer in Millisekunden ist.

11. Verfahren nach einem der vorhergehenden Ansprüche, wobei die Dauer, die Menge und die Häufigkeit der genannten Einspritzungen von Wasserstoff, Ergänzungsoxidationsmittel (64) und Verdünnungsmittel die OH-Radikalenbildung unmittelbar stromabwärts des Kopfes der Brennkammer (30) regeln.

12. Gasturbinenmaschine, die umfasst:
einen Gaskompressor;
eine Vielzahl von Brennkammern (30);
eine Turbine, die durch das ausgedehnte Abgas der Brennkammern (30) antreibbar ist;
einen primären Kraftstoffkreislauf für die Brennkammern (30), wobei der Kraftstoffkreislauf Mittel zum Zuführen von Kohlenwasserstoffkraftstoff (40) und Luft an ein Kopfende jeder der Brennkammern (30) aufweist;
**dadurch gekennzeichnet, dass**
die Gasturbinenmaschine umfasst:
einen Ergänzungskraftstoffkreislauf für einen oder mehrere der Brennkammern, wobei der Ergänzungskraftstoffkreislauf eine Vielzahl von Wasserstoffeinspritzdüsen (60) zum Zuführen von zusätzlichem Wasserstoff in die Brennkammern (30) aufweist;
einen oder mehrere Einspritzeinlässe (64) zum Zuführen eines Ergänzungsoxidationsmittels in eine oder mehrere der Brennkammern (30);
eine oder mehrere Kohlenmonoxidsensoren, die in dem Abgasstrom der Brennkammern (30) angeordnet sind; und
einen Feedbackregelkreis zum Ermitteln der enge von zusätzlicher Wasserstoff- und Ergänzungsoxidationsmittelzuführung, die notwendig ist, um die Menge von Kohlenmonoxid und Sauerstoff, die in dem Gasturbinenabgas vorhanden ist, zu reduzieren, zum Bestimmen einer oder mehrerer der Vielzahl von Wasserstoff-einspritzdüsen (60) und der Einspritzeinlässe (64) für das Zuführen der ermittelten Menge von zusätzlichem Wasserstoff und Ergänzungsoxidationsmittel in die Brennkammer (30), und zum Einspritzen der zusätzlichen Wasserstoffzuführung und Ergänzungsoxidationsmittelzuführung durch die bestimmten Wasserstoffeinspritzdüsen (60) und die Einspritzeinlässe (64).

13. Gasturbinenmaschine nach Anspruch 12, die außerdem Mittel zum Einspritzen von Verdünnungsmittel in den Abgasstrom der Brennkammer (30) aufweist, um die Temperatur des Abgasstroms zu regeln.

14. Gasturbinenmaschine nach Anspruch 12 oder 13, wobei der Feedbackregelkreis einen oder mehrere OH-Radikalendetektoren aufweist, die in dem Abgasstrom der Brennkammern (30) angeordnet sind.

15. Gasturbinenmaschine nach einem der Ansprüche 12 bis 14, wobei die Wasserstoffeinspritzdüsen (60) eine Menge Wasserstoff zuführen, die etwa 1/10 der Masse des Kohlenwasserstoffkraftstoffs (40) ist, der den Brennkammern (30) zugeführt wird.

## Revendications

1. Procédé de réduction de la quantité d'émissions (50) dans un système de combustion d'hydrocarbure de type oxyhydrocarbure, comprenant les étapes consistant à :
(a) acheminer un carburant hydrocarboné (40) et un agent oxydant (42) à une portion d'extrémité de tête d'une ou plusieurs chambres de combustion (30) dudit système de combustion ;
(b) enflammer le mélange dudit carburant hydrocarboné (40) et dudit agent oxydant (42) pour former un premier courant d'échappement de chambre de combustion ;
(c) détecter la quantité de monoxyde de carbone présente dans ledit premier courant d'échappement de la chambre de combustion ;
(d) déterminer une quantité d'hydrogène supplémentaire et de source d'agent oxydant d'appoint nécessaire pour réduire la quantité de monoxyde de carbone et d'oxygène présente dans le courant d'échappement de la chambre de combustion sur la base de ladite quantité détectée de monoxyde de carbone ;
(e) identifier une ou plusieurs buses d'injection (60, 64) à l'intérieur de ladite chambre de combustion (30) en aval de sa portion d'extrémité de tête pour injecter l'hydrogène supplémentaire et l'agent oxydant d'appoint ; et
(f) injecter la quantité déterminée d'hydrogène supplémentaire et d'agent oxydant d'appoint dans ladite chambre de combustion au niveau des buses d'injection identifiées (60, 62) sur la base de ladite quantité détectée de monoxyde de carbone.

2. Procédé selon la revendication 1, comprenant en outre l'étape d'injection d'un diluant dans ladite chambre de combustion (30) en un point situé encore plus en aval dudit premier courant d'échappement de la chambre de combustion.

3. Procédé selon la revendication 2, comprenant par ailleurs l'étape de commande de la température du courant d'échappement au point d'injection dudit diluant.

4. Procédé selon la revendication 2 ou la revendication 3, dans lequel ledit diluant comprend du dioxyde de carbone.

5. Procédé selon l'une quelconque des revendications 1 à 4, dans lequel ladite étape d'acheminement de quantités définies dudit carburant hydrocarboné (40) et dudit agent oxydant d'appoint (64) à une ou plusieurs chambres de combustion (30) entraîne une valeur de Phi supérieure à 1,0.

6. Procédé selon l'une quelconque des revendications 1 à 5, dans lequel la quantité dudit hydrogène (60) injectée dans ladite chambre de combustion (30) est d'environ 1/10^{ème} de la masse de carburant hydrocarboné (40) initiale acheminée.

7. Procédé selon l'une quelconque des revendications 1 à 6, dans lequel ledit système de combustion d'hydrocarbure de type oxyhydrocarbure comprend de multiples chambres de combustion (30).

8. Procédé selon l'une quelconque des revendications 2 à 7, dans lequel ledit diluant est injecté dans ladite chambre de combustion (30) en quantité suffisante pour empêcher l'autre formation de monoxyde de carbone suivant ladite injection d'hydrogène (60).

9. Procédé selon l'une quelconque des revendications 1 à 8, dans lequel lesdites étapes d'injection dudit hydrogène (60) et dudit agent oxydant d'appoint (64) entraînent la formation d'une quantité de radicaux OH suffisante pour réduire la quantité de CO par réaction avec ledit agent oxydant d'appoint (64) pour former du CO₂.

10. Procédé selon l'une quelconque des revendications 2 à 9, dans lequel lesdites injections d'hydrogène, d'agent oxydant d'appoint (64) et de diluant sont effectuées selon les périodes de temps relatives suivantes : hydrogène 2X ; agent oxydant d'appoint 5X ; et diluant 6X, X étant la période de temps d'injection en millisecondes.

11. Procédé selon l'une quelconque des revendications précédentes, dans lequel la durée, la quantité et la fréquence desdites injections d'hydrogène, d'agent oxydant d'appoint (64) et de diluant commandant la formation de radicaux OH immédiatement en aval de la tête de la chambre de combustion (30).

12. Moteur à turbine à gaz, comprenant :
un compresseur de gaz ;
une pluralité de chambres de combustion (30) ;
une turbine entraînée par l'échappement dilaté provenant desdites chambres de combustion (30) ;
un circuit de carburant primaire pour lesdites chambres de combustion (30), ledit circuit de carburant comprenant des moyens pour acheminer du carburant hydrocarboné (40) et de l'air à une extrémité de tête de chaque chambre de combustion (30) ;
**caractérisé en ce qu'**il comprend :
un circuit de carburant d'appoint pour une ou plusieurs desdites chambres de combustion, ledit circuit de carburant d'appoint comprenant une pluralité de buses d'injection d'hydrogène (60) pour acheminer de l'hydrogène supplémentaire dans lesdites chambres de combustion (30) ;
un ou plusieurs orifices d'injection (64) pour acheminer un agent oxydant d'appoint dans une ou plusieurs desdites chambres de combustion (30) ;
un ou plusieurs capteurs de monoxyde de carbone disposés dans le courant d'échappement desdites chambres de combustion (30) ; et
une boucle de rétroaction pour déterminer la quantité acheminée d'hydrogène supplémentaire et d'agent oxydant d'appoint nécessaire pour réduire la quantité de monoxyde de carbone et d'oxyde présente dans l'échappement de la turbine à gaz, identifier une ou plusieurs de la pluralité de buses d'injection d'hydrogène (60) et des orifices d'injection (64) pour acheminer la quantité déterminée d'hydrogène supplémentaire et d'agent oxydant d'appoint dans la chambre de combustion (30) et injecter la source d'hydrogène supplémentaire et la source d'agent oxydant d'appoint à travers les buses d'injection d'hydrogène identifiées (60) et les orifices d'injection (64).

13. Moteur à turbine à gaz selon la revendication 12, comprenant en outre des moyens pour injecter un diluant dans le courant d'échappement desdites chambres de combustion (30) afin de commander la température dudit courant d'échappement.

14. Moteur à turbine à gaz selon la revendication 12 ou 13, dans lequel ladite boucle de rétroaction comprend un ou plusieurs détecteurs de radicaux OH disposés dans le courant d'échappement desdites chambres de combustion (30).

15. Moteur à turbine à gaz selon l'une quelconque des revendications 12 à 14, dans lequel lesdites buses d'injection d'hydrogène (60) acheminent une quantité d'hydrogène égale à environ 1/10^{ème} de la masse dudit carburant hydrocarboné (40) acheminée auxdites chambres de combustion (30).
